# EUROPEAN PATENT SPECIFICATION

(11) **EP 3 516 187 B1**
(45) Date of publication and mention of the grant of the patent: **02.12.2020**
(21) Application number: 16775146.0
(22) Date of filing: 23.09.2016
(51) Int. Cl.: F02B 41/06, F02B 33/20, F01N 3/08, F01N 3/025, F01N 3/36, F02D 41/02, F01N 3/20, F02G 3/02, F02D 41/30, F02D 41/40

(54) **A METHOD OF CONTROLLING AN INTERNAL COMBUSTION ENGINE SYSTEM**
VERFAHREN ZUR STEUERUNG EINES VERBRENNUNGSMOTORSYSTEMS
PROCÉDÉ DE COMMANDE D'UN SYSTÈME DE MOTEUR À COMBUSTION INTERNE

(43) Date of publication of application: 31.07.2019
(73) Proprietor: Volvo Truck Corporation, 405 08 Göteborg (SE)
(72) Inventor: ANDERSSON, Lennart, 432 95 Varberg (SE); ANDERSSON, Arne, 435 42 Mölnlycke (SE); JOHANSSON, Bengt, 226 47 Lund (SE); LUNDGREN, Staffan, 438 53 Hindås (SE); LAM, Nhut, 267 34 Bjuv (SE)
(74) Representative: Kransell & Wennborg KB
(86) International application number: PCT/EP2016/072730
(87) International publication number: WO 2018/054490

(56) References cited:
- EP-A1- 2 053 208
- EP-A1- 2 341 225
- EP-A1- 2 857 643
- EP-A1- 2 886 827
- EP-A1- 3 056 702
- WO-A1-96/25593
- DE-A1-102012 112 167
- US-A- 4 715 326
- US-A1- 2010 300 385

## Description

### TECHNICAL FIELD

The invention relates to a method of controlling an internal combustion engine system comprising a combustor arranged to repetitively receive air and fuel, combust the received air and fuel, and expand the combusted air and fuel, an expander comprising a cylinder and a piston arranged to reciprocate in the cylinder, the piston being connected to a crankshaft of the engine system, and an exhaust guide arranged to guide exhaust gases from the combustor to the expander.

The invention can be applied in heavy-duty vehicles, such as trucks, buses and construction equipment, e.g. working machines. The invention can also be applied to cars. Although the invention will be described with respect to a truck, the invention is not restricted to this particular vehicle type.

### BACKGROUND

It is known that internal combustion engines with multiple stages of compression and expansion may provide for reaching very high pressures and for extracting more energy from the fuel. US20100300385 provides an example of such an engine. Although known multistage expansion engines may provide more energy, there is still a desire to improve such engines with respect to their energy output.

Multistage expansion engines may also present problems with nitrogen oxides (NOx) reduction during low load operations, in particular if engine is a Diesel engine. For example, a Selective Catalytic Reduction (SCR) device may not operate properly due to the high efficiency and expansion cooling the exhaust below a normal operation temperature for an SCR device. Thus, there is also a desire to improve emission characteristics of such multistage expansion engines.

According to its abstract, EP 2 053 208 relates to an air breathing, fuel consuming internal combustion engine such as a diesel or homogenous charge compression ignition engine has an air intake and an exhaust for products of combustion.

### SUMMARY

An object of the invention is to provide a multistage expansion internal combustion engine with an improved energy output. Another object of the invention is to provide a multistage expansion internal combustion engine with improved emission characteristics.

The objects are reached with a method of controlling an internal combustion engine system according to claim 1.

It is understood that in a normal engine operation steps of the method are repeated. Thus, for example, during operation the steps of providing a first fuel injection, allowing at least a portion of the fuel from the first fuel injection to be combusted in the combustor in air introduced to the combustor, and allowing a first expansion in the combustor of the combusted fuel and air, are repeated. The second fuel injection may be provided into the exhaust gases produced by the combustion. Where the second fuel injection is provided into the combustor, it is preferably provided after the combustion and before an introduction of air into the combustor for an immediately subsequent combustion in the combustor.

The exhaust gases produced by the combustion may be allowed to be guided to a pre-expander exhaust treatment device in the exhaust guide, and allowing the pre-expander exhaust treatment device to provide an exhaust treatment process to the received exhaust gases, the second fuel injection being provided upstream of the pre-expander exhaust treatment device. Thus, similarly to the engine system described above, the method allows for the fuel in the second fuel injection to react, in an exhaust treatment device in the exhaust guide, with air in the exhaust gases to generate heat which may be converted to mechanical work in the following expansion stage, increasing the power output of the system and/or providing an effective emission reducing process. Also, the multi-expansion may provide enough time for oxidation of soot.

Allowing the pre-expander exhaust treatment device to provide an exhaust treatment process comprise allowing nitrogen oxides (NOx) in the received exhaust gases to be stored in the pre-expander exhaust treatment device. The exhaust treatment process may comprise a reaction of fuel from the second fuel second fuel injection with air in the received exhaust gases and at least a portion of the stored nitrogen oxides (NOx) to produce nitrogen (N2). As suggested, the energy released from the reaction may be converted to mechanical energy in the expander whereby the fuel cost for NOx reduction may be kept to a minimum.

It is understood that the steps of providing a second fuel injection and allowing stored nitrogen oxides (NOx) to build up in the pre-expander exhaust treatment device between each of the second fuel injections are preferably repeated a plurality of times. Thereby the added fuel injected by the second fuel injection may advantageously react with the stored NOx to produce nitrogen.

The exhaust treatment process preferably comprises a reaction of fuel from the second fuel injection with air in the received exhaust gases and at least a portion of the stored nitrogen oxides (NOx) to produce ammonia (NH3). The produced ammonia may be allowed to react with nitrogen oxides (NOx) in the exhaust gases from the pre-expander exhaust treatment device to produce nitrogen (N2). The reaction between the ammonia (NH3) and the nitrogen oxides (NOx) may be provided in a post-expander exhaust treatment device arranged to receive exhaust gases from the expander.

Thereby, ammonia (NH3) may be produced by the reaction upstream of the expander, and used as a reductant in a further process downstream of the expander, which is beneficial since the temperature upstream of the expander may be too high for such a further process. For example, upstream of the expander a combined three-way/NOx reduction catalyst may be provided, to which fuel is introduced to convert NOx to N2 and NH3, allowing NH3 and remaining NOx to be converted to N2 in the further process which may be provided by a Selective Catalytic Reduction (SCR) catalyst. The combined process may be exemplified as: NOx + fuel provides 90%N2 + 5%NH3 + 5%NOx in turn providing 100%N2.

A further benefit of the ammonia production by the process upstream of the expander is that the need for a dedicated dosing system for urea for the further exhaust treatment process is avoided. Thereby space requirements and cost is reduced, and engine system handling is simplified since fuel supplied for the system power production may also serve the further exhaust treatment process. Also, the temperature downstream of the expander may be too low for forming ammonia from the urea. Producing ammonia upstream of the expander by means of the added fuel solves this problem.

Preferably, the method comprises controlling the first fuel injection so as for the combustion in the combustor to be a lean combustion. Thus, the amount of fuel injected at the first fuel injection may be controlled so as for the combustion in the combustor to be a lean combustion, e.g. with a lambda value of about 1.2. Thereby, the second fuel injection may be controlled so as for fuel from the second fuel injection to provide, with air in the exhaust gases produced by the combustion, a substantially stoichiometric mixture of air and fuel. Thereby, all oxygen introduced to the combustor may be combusted, also in a Diesel cycle engine. Thus, a further combustion may be provided in a pre-expander exhaust treatment device allowing heat generated therefrom to be converted to mechanical energy so as for the power output of the system to be increased. Where an exhaust valve is provided at the combustor, the timing of each of a plurality of second fuel injections may be synchronised with the timing of a respective of a plurality of first fuel injections.

As suggested, the method comprise allowing the exhaust gases produced by the combustion to be guided to a pre-expander exhaust treatment device in the exhaust guide, by allowing the pre-expander exhaust treatment device to provide an exhaust treatment process to the received exhaust gases, the second fuel injection being provided upstream of the pre-expander exhaust treatment device, and by allowing heat produced by the exhaust treatment process in the pre-expander exhaust treatment device to be at least partially converted to mechanical energy in the second expansion in the expander. Thereby the power output may be increased during a high load operation of the system.

It should be noted that, where the system comprises an exhaust gas recirculation arrangement, the method may involve recirculating exhaust gases to an air guide arranged to provide air to the combustor. Thereby, a stoichiometric mixture may be provided by the second fuel injection also at somewhat lower loads, such as medium loads, e.g. above 40% or 50%. I.e. the amount of air provided to the combustor may be reduced by exhaust gas recirculation so as for the lambda value to be retained.

Where the system comprises a piston compressor arranged to be driven by the crankshaft and provided with a compressor inlet valve, and an air guide arranged to guide air from the compressor to the combustor for the air introduction to the combustor, the method may comprise controlling the compressor inlet valve so as to control the amount of air introduced to the combustor. The inlet valve may be arranged to be actuated by a compressor valve actuator assembly for an adjustable valve actuation. For example, the inlet valve may selectively be left open during the beginning of the compression stroke so as to expel part of the admitted air similarly to a Miller cycle. Alternatively, similarly to another form of the Miller cycle, the inlet valve may be selectively closed during the intake stroke so as to reduce the amount of admitted air. Thereby, a stoichiometric mixture may be provided by the second fuel injection also at somewhat lower loads, such as medium loads, e.g. above 40% or 50%. I.e. the amount of air provided to the combustor may be reduced by the compressor inlet valve control so as for the lambda value in the combustor, e.g. about 1.2, to be retained. The compressor inlet valve control may be beneficially combined with said exhaust gas recirculation.

Preferably, allowing nitrogen oxides in the received exhaust gases to be stored in the pre-expander exhaust treatment device is done in a first mode of operation of the engine system, and controlling the second fuel injection so as for fuel from the second fuel injection to provide a substantially stoichiometric mixture of air and fuel is done in a second mode of operation of the engine system, the method may further comprise receiving a request for a torque produced by the engine system, and selecting, in dependence on the torque request, to operate the engine system in the first mode or in the second mode. For example, the first mode may be executed at relatively low loads of the system and the second mode may be executed at relatively high loads of the system. Thereby, the system may serve a dual purpose of being used for said effective exhaust treatment process at low loads and said power output increasing strategy at high loads.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples. In the drawings:
Fig. 1 is a partially sectioned side view of a vehicle in the form of a truck.
Fig. 2 is a schematic perspective view of an engine system in the vehicle in fig. 1.
Fig. 3 is a schematic cross-sectional view of the engine system in fig. 2.
Fig. 4 is a block diagram showing steps in a method to control the system in fig. 3.
Fig. 5 is a block diagram showing further steps in the method to control the system in fig. 3.
Fig. 6 is a pressure to crankshaft angle diagram presented with reference to method steps in fig. 5.
Fig. 7a - fig. 7c are diagrams presenting the lambda value, the nitrogen oxides level and the ammonia level as functions of time with reference to method steps in fig. 5.
Fig. 8 is a block diagram showing further steps in the method to control the system in fig. 3.
Fig. 9 is a schematic cross-sectional view of an engine system according to a further embodiment of the invention.
Fig. 10 is a block diagram showing steps in a method to control the system in fig. 9.
Fig. 11 is a schematic cross-sectional view of an engine system according to another embodiment of the invention.
Fig. 12 is a schematic cross-sectional view of an engine system according to yet another embodiment of the invention.
Fig. 13 is a schematic cross-sectional view of an engine system according to still another embodiment of the invention.

### DETAILED DESCRIPTION OF EXAMPLE EMBODIMENTS OF THE INVENTION

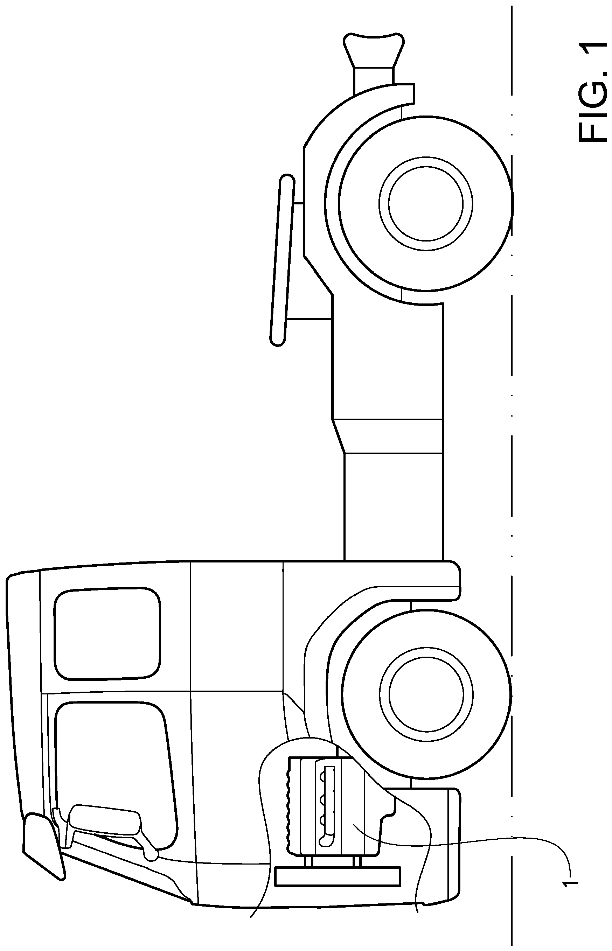

Fig. 1 shows a vehicle in the form of a truck, or a tractor for a semitrailer. It should be noted however that the invention is applicable to a variety of alternative types of vehicles, such as a car, a bus, or a working machine such as a wheel loader. The vehicle comprises an internal combustion engine system 1.

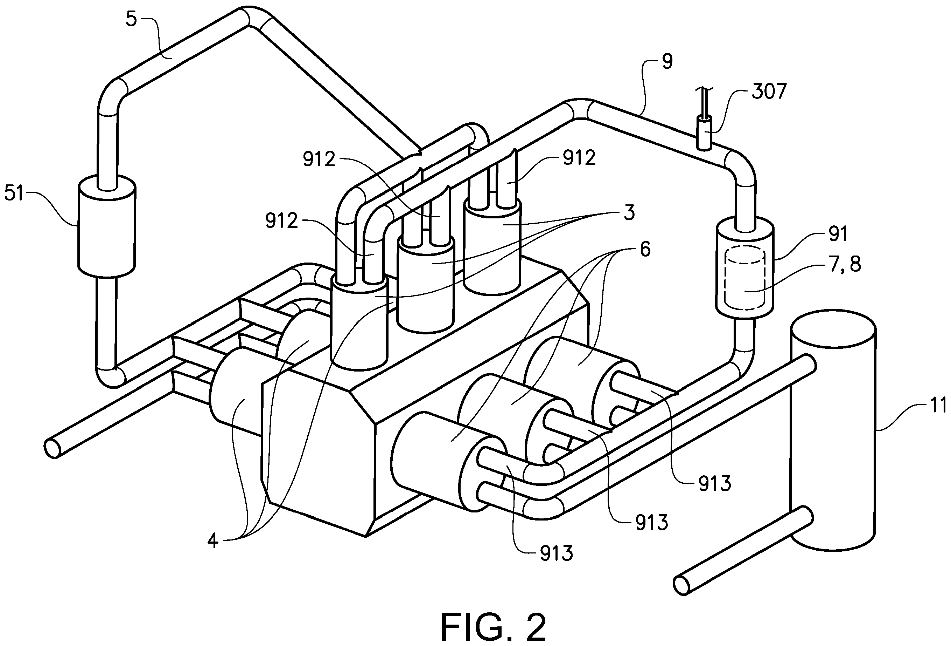

Fig. 2 is schematic and does not show, for simplicity of this presentation, certain parts such as devices for the actuation of inlet and outlet valves in cylinders of the engine system. The engine system 1 comprises a multi-stage compression and expansion internal combustion engine. The engine comprises three combustors 3, in the form of cylinders with pistons, and three piston compressors 4.

The system further comprises an air guide 5 arranged to guide compressed air from the compressors 4 to the combustors 3. The air guide is provided with an air buffer container 51, arranged to receive compressed air from the compressors 4, to provide an air buffer volume for the compressed air, and to deliver the compressed air to the combustors 3.

The system further comprises three piston expanders 6 arranged to expand exhaust gases from the combustors 3 and to extract energy from the expanded exhaust gases. An exhaust guide 9 is arranged to guide exhaust gases from the combustors 3 to the expanders 6. The exhaust guide 9 presents combustor branches 912, each for connecting the exhaust guide 9 to a respective of the combustors 3. The exhaust guide 9 also presents expander branches 913, each for connecting the exhaust guide 9 to a respective of the expanders 6. The exhaust guide 9 further comprises an exhaust buffer container 91 described closer below.

It is understood that the engine system may comprise any number of combustors 3, compressors 4, and expanders 6. In this example, the combustors 3, compressors 4, and expanders 6 share a single air buffer 51 and a single exhaust buffer container 91. However, the number of air guides 5, air buffers 51, exhaust guides 9, and exhaust buffer containers 91 may vary as well. For example, it is conceivable that a plurality of air guides 5 with respective air buffers 51 extend between respective pairs of compressors 4 and combustors 3. Also, in some embodiments, there may be more than one exhaust guide 9 with respective exhaust buffer containers 91 extending between respective pairs of combustors 3 and expanders 6. In is also conceivable that there are two or more air guides, and two or more exhaust guides, connected to respective groups of combustors.

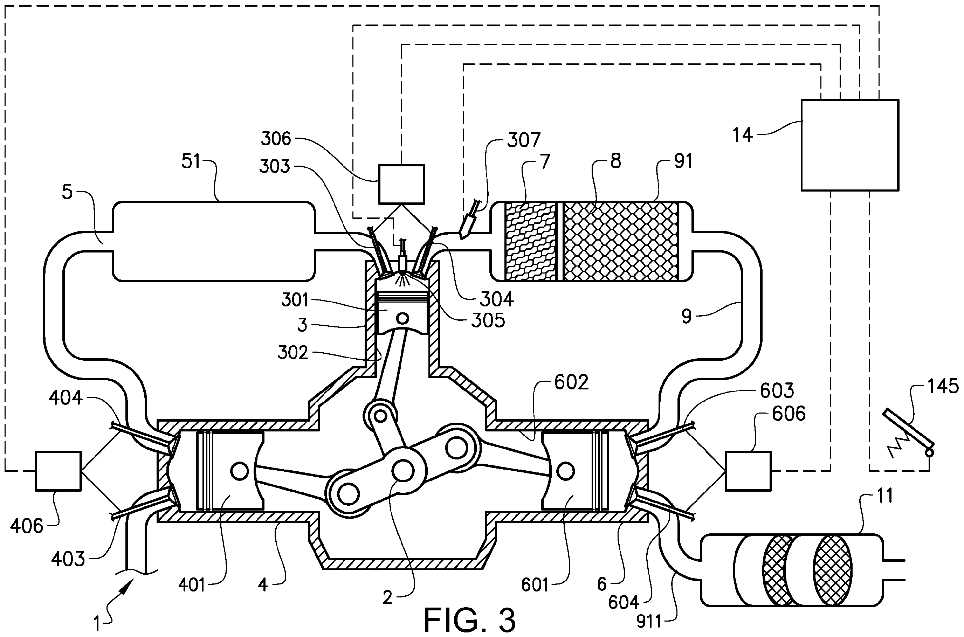

Reference is made to fig. 3 in which only one of the combustors 3, only one of compressors 4, and only one of the expanders 6 are shown. For simplicity, the combustor 3, the compressor 4, and the expander 6 are shown as all being located in the same cross-sectional plane; in a real implementation of the embodiment, the combustor 3, the compressor 4, and the expander 6 are preferably offset in relation to each other along the crankshaft 2.

The piston 301 of each combustor 3 is arranged to reciprocate in the respective cylinder 302, whereby the pistons are all arranged to drive a crankshaft 2 of the engine. The combustors 3 are arranged to repetitively receive air and fuel, combust the received air and fuel, and expand the combusted air and fuel. The pistons 601 of the expanders 6 are arranged to drive the crankshaft 2 with the energy extracted from the exhaust gases from the combustors 3. Further, the pistons 401 of the compressors 4 are all arranged to be driven by the crankshaft 2.

The engine system comprises a control unit 14 arranged to control various function of the system as described below.

The combustors 3 are provided with respective sets of combustor inlet and outlet valves 303, 304, arranged to be actuated by a combustor valve actuator assembly 306. The outlet valve 304 is herein also referred to as an exhaust valve 304. The combustor valve actuator assembly 306 may be arranged to actuate the combustor inlet and outlet valves 303, 304 in any manner known per se, e.g. with cams mounted on camshafts. The combustor valve actuator assembly 306 is controllable by the control unit 14, to adjust the timing and the maximum movements of the combustor inlet and outlet valves 303, 304. The combustor valve actuator assembly 306 is herein also referred to as a variable valve timing mechanism 306.

The expanders 6 are provided with respective sets of expander inlet and outlet valves 603, 604, arranged to be actuated by an expander valve actuator assembly 606, including e.g. cams mounted on camshafts. The expander valve actuator assembly 606 is controllable by the control unit 14, to adjust the timing and the maximum movements of the expander inlet and outlet valves 603, 604. The expander valve actuator assembly 606 is herein also referred to as an expander variable valve timing mechanism 606.

In addition, the compressors 4 are provided with respective sets of said compressor inlet and outlet valves 403, 404, arranged to be actuated by a compressor valve actuator assembly 406, including e.g. cams mounted on camshafts. The compressor valve actuator assembly 406 is controllable by the control unit 14, to adjust the timing and the maximum movements of the compressor inlet and outlet valves.

For receiving the fuel, the combustors 3 are provided with respective main fuel injectors 305 for injecting a fuel into the cylinders 302. The fuel may be of any suitable type, e.g. diesel, methane e.g. in liquid natural gas (LNG), gasoline, etc. The main fuel injectors 305 are controllable by the control unit 14. In this example, the combustors 3 are arranged to provide a Diesel cycle to extract work from the air and fuel provided. However, the invention is equally applicable to engines in which the combustors are arranged to provide an Otto cycle, wherein the engine system may be provided with means for air mass flow control, such as variable inlet and outlet valves of the compressors 4, described further below, for controlling the air supply to the combustors 3. Alternatively, or in addition, the means for air mass flow control may comprise one or more throttles for controlling the air supply to the combustors 3. The engine system may be provided with spark plugs in the combustors.

A pre-expander exhaust treatment device 7, 8 is located in the exhaust buffer container 91, and arranged to provide an exhaust treatment process to the exhaust gases from the combustors 3. The pre-expander exhaust treatment device 7, 8 comprises a three way catalytic converter 7 of a nitrogen oxide (NOx) storage type, and a particulate filter 8 located downstream of the three way catalytic converter 7.

Thus, in the multi-stage compression and expansion engine in this example, the compressors 4 are arranged to compress the air, the combustors are arranged to compress the air further, and to expand the gases in the combustors 3, and the expanders are arranged to expand the gases further.

It is preferred that the expansion ratio of the expanders 6 is at least 30% of a total expansion ratio of the combination of the combustors 3 and the expanders 6. In this embodiment, the expansion ratio of the expanders 6 is larger than an expansion ratio of the combustor 3.

The system further comprises a post-expander exhaust treatment device 11 arranged to receive exhaust gases from the expander 6 via a post expander exhaust conduit 911, and to provide an exhaust treatment process to the received exhaust gases. The post-expander exhaust treatment device 11 is in this example a selective catalytic reduction (SCR) catalyst.

As can be seen also in fig. 2, the system comprises a post combustion fuel injector 307 arranged to inject fuel into the exhaust guide 9, upstream of the downstream of the pre-expander exhaust treatment device 7, 8, and downstream of the combustor branches 912. It should be noted that in alternative embodiments, the post combustion fuel injector 307 may be arranged to inject fuel into one of the combustor branches 912 of the exhaust guide 9. In further embodiments, the system may comprise a plurality of post combustion fuel injectors 307, each arranged to inject fuel into a respective of the combustor branches 912.

It should be noted that the post combustion fuel injector 307 may be arranged to direct a spray of fuel at least mainly in a downstream direction in the exhaust guide 9, at least mainly in an upstream direction in the exhaust guide 9, or at least mainly transversely to the gas flow in the exhaust guide 9. These alternatives for the direction of the spray of fuel may all be provided regardless of the location of the post combustion fuel injector 307, and regardless of whether or not there is one post combustor fuel injector 307 in the system, or a plurality of them.

The exhaust guide presents 9, at least downstream of the post combustion fuel injector 307 an internal surface which is inert, i.e. the material of the surface is such that it will not participate in any chemical reaction. For example, for the inert surface, the exhaust guide 9 may be provided with an inner layer of glass, e.g. quartz glass.

As suggested by fig. 3, the post combustion fuel injector 307 is controllable by the control unit 14. The fuel injected by the post combustion fuel injector 307 is of the same type and is delivered from the same source, e.g. in the form of a fuel container (not shown), as the fuel injected by the main fuel injectors 305 into the cylinders 302 of the combustors 3.

The control unit 14 is arranged to receive signals from a control device 145 which is arranged to be manipulated by a driver of the vehicle. The control device is provided in the form of a gas pedal 145. The control unit 14 is arranged to determine, based at least partly on signals received from the control device 145, a requested torque to be provided by the engine system. The control unit 14 is further arranged to determine based on the requested torque whether to operate the engine system in a first mode or in a second mode. In this embodiment, the control unit 14 is arranged to compare the requested torque to a predetermined torque threshold value, and to determine based on the comparison whether to operate the engine system in the first mode or in the second mode.

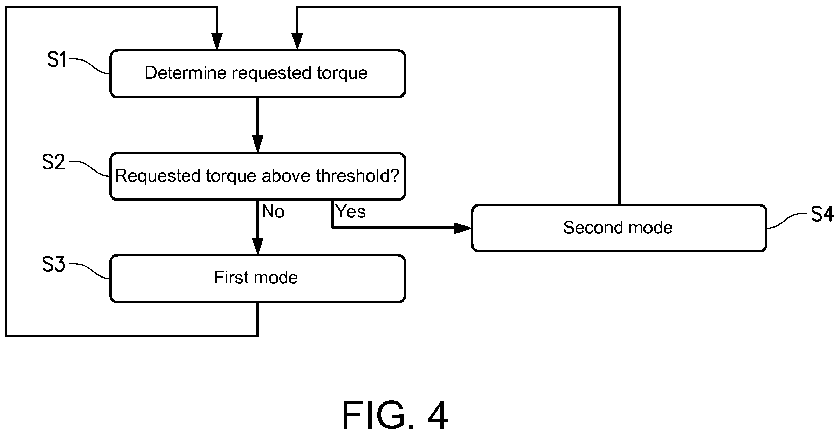

Reference is made to also fig. 4 depicting steps in a method of controlling the engine system in fig. 3. The method comprises determining S1 a requested torque of the engine system at least partly based on the signals from the control device 145. If it is determined S2 that the requested torque is smaller than the torque threshold value, the engine system is operated S3 in the first mode. If it is determined S2 that the requested torque is larger than the torque threshold value, the engine system is operated S4 in the first mode.

The determination S1 of the requested torque and the comparison of the requested torque to the threshold torque are repeated throughout the operation of the engine system.

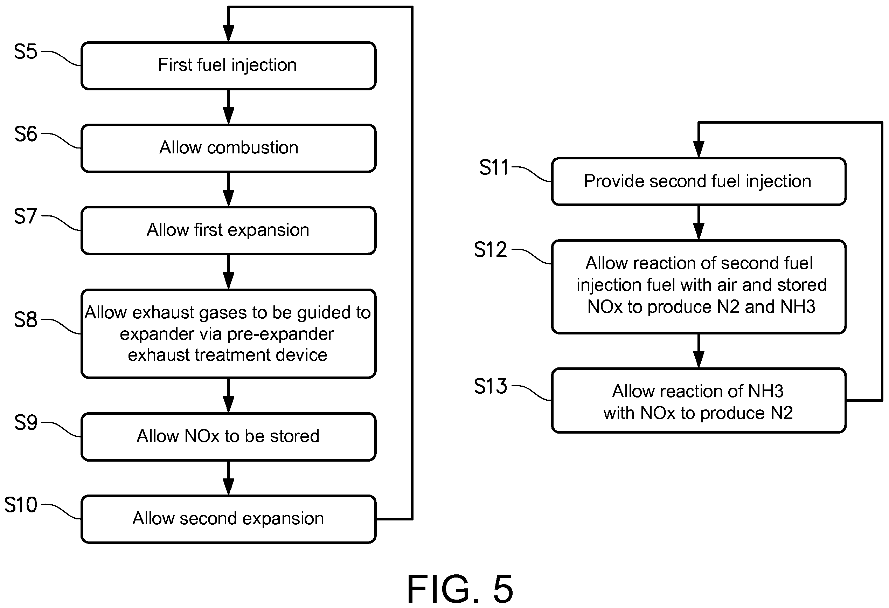

Reference is made also to fig. 5. In the first mode the following steps are carried out repeatedly:
A first fuel injection is done S5 by means of the main fuel injector 305 into one of the cylinders 302 of one of the combustors 3. Such first fuel injections are of course done S5 in each of repeated cycles in the combustor 3. Also, they are also done S5 in repeated cycles in the other combustors 3 according to the ignition order between the combustors 3. The first fuel injection is done at a top dead centre position of the piston 301 at the end of a compression stroke in the respective cycle. In the compression stroke air admitted by actuation of the inlet valve 303 is compressed, and upon the first fuel injection the fuel is allowed S6 to be combusted in the combustor 3, and a first expansion of the combusted air and fuel is allowed S7. The first mode being executed during relatively low requested torque levels provides for a surplus of air remaining in the exhaust gases after the combustion.

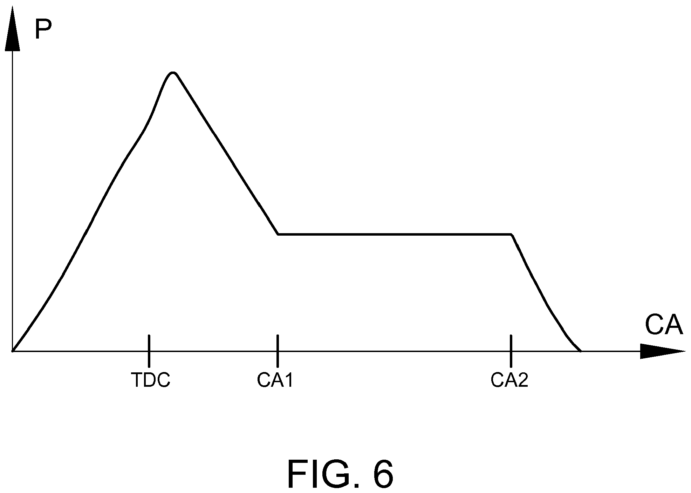

Fig. 6 can be seen as a diagram of the pressure P, as a function of the crankshaft angle CA, of a "unit" of gas passing through the engine system via one of the combustors 3 and one of the expanders 6. In fig. 6 the pressure increase during the air compression up to the top dead centre TDC position can be seen. The first fuel injection S5 at the top dead centre TDC position is followed a further pressure increase during the air and fuel combustion. Subsequently the pressure is decreased during the first combustion until a first crankshaft angle CA1 at which the combustor exhaust valve 304 is opened.

Exhaust gases produced by the combustion are allowed S8 to be guided to the expanders 6 via the pre-expander exhaust treatment device 7, 8 in the exhaust guide 9. The pre-expander exhaust treatment device 7, 8 provides an exhaust treatment process to the received exhaust gases. This process includes storing S9 in the three way catalytic converter 7 nitrogen oxides (NOx) in the received exhaust gases. In the expanders 6 a second expansion of the received exhaust gases is allowed S10. Thereby, as indicated in fig. 6, the pressure is decreased further starting at a second crankshaft angle CA2. The exhaust gases are then received from the expanders 6 by the post-expander exhaust treatment device 11.

The first mode of operation further includes providing S11 into the exhaust guide 9, upstream of the pre-expander exhaust treatment device, by means of the post combustion fuel injector 307, a second fuel injection after the first expansion. The exhaust treatment process comprises a reaction S12 of fuel from the second fuel second fuel injection, with air in the received exhaust gases and a portion of the nitrogen oxides (NOx) stored in the three way catalytic converter 7, to produce nitrogen (N2) and ammonia (NH3). This reaction may for example be: CHx + y O2 + z NO -> CO2 + x/2 H2O + z1 N2 + z2 NH3 + z3 N2O, where z1, z2 and z3 depends on the type of catalyst used, the temperature, and the lambda value of the gas mixture.

In the SCR process of the post-expander exhaust treatment device 11 the produced ammonia (NH3) is allowed S13 to react with nitrogen oxides (NOx) in the exhaust gases from the pre-expander exhaust treatment device 7, 8 to produce nitrogen (N2). The SCR process may for example include the following reactions: O2 + 4NO + 4NH3 -> 6 H2O + 4 N2, and 2NO2 + 2NO + 4NH3 -> 6 H2O + 4 N2.

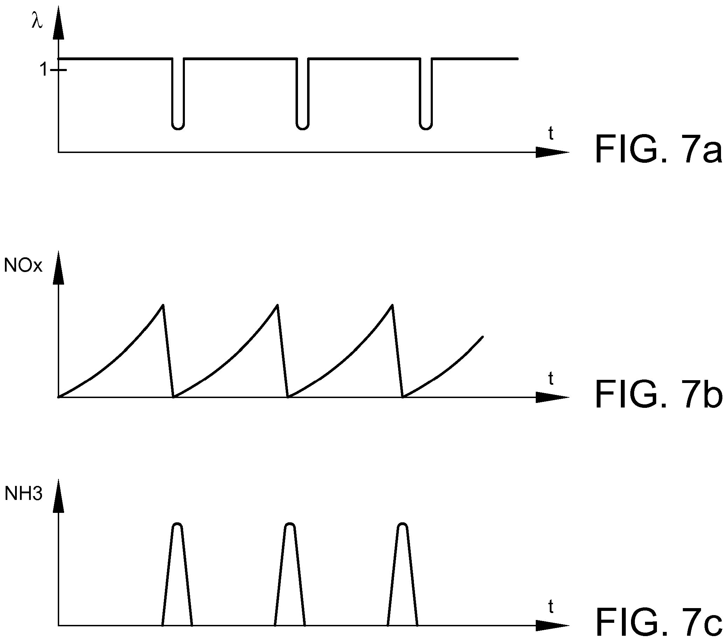

Reference is made also to fig. 7a - fig. 7c. The steps of providing a second fuel injection and allowing stored nitrogen oxides (NOx) to build up in the three way catalytic converter 7 between each of the second fuel injections are during the first mode of operation. As can be seen in fig. 7a, the first fuel injections result in a lean combustion, i.e. with a lambda value A above 1. The second fuel injections each provide a rich mixture of air and fuel in the exhaust gases, i.e. with a lambda value A below 1.

As can be seen in fig. 7b, between consecutive second fuel injections, nitrogen oxides (NOx) are allowed to build up in the three way catalytic converter 7. The reaction of the second fuel injection fuel with air and stored nitrogen oxides (NOx) provides a reduction of the amount of stored nitrogen oxides (NOx), as can be seen in fig. 7b, and a burst of ammonia (NH3), as can be seen in fig. 7c. The second fuel injections are done at a frequency which is adapted to the rate of build-up of nitrogen oxides (NOx) in the three way catalytic converter 7. Thus, it should be noted that the second fuel injections are done at a frequency which is not necessarily matched to the frequency of the first fuel injections.

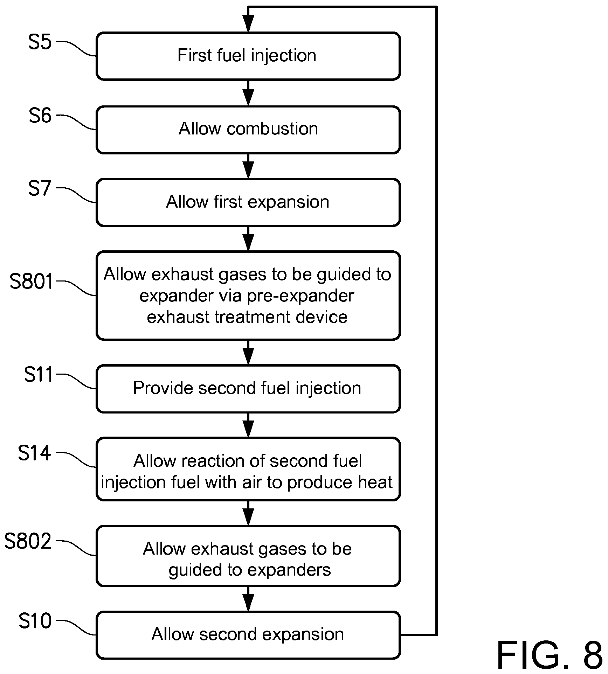

Reference is made also to fig. 8. In the second mode S4 the following steps are carried out repeatedly:
A first fuel injection is done S5 by means of the main fuel injector 305 into one of the cylinders 302 of one of the combustors 3, in each of repeated cycles in the combustors 3 according to the ignition order between the combustors 3. Upon the first fuel injection the fuel is allowed S6 to be combusted with admitted air in the combustor 3, and a first expansion of the combusted air and fuel is allowed S7. The first fuel injection S5 is controlled so as for the combustion to be a lean combustion with a relatively low lambda value for a Diesel cycle, for example 1.1-1.3, e.g. around 1.2. The combustion S6 thus provides a surplus of air remaining in the exhaust gases after the combustion.

Exhaust gases produced by the combustion are allowed S801 to be guided to the pre-expander exhaust treatment device 7, 8. Upstream of the pre-expander exhaust treatment device 7, 8, a second fuel injection is provided S11 upstream of the pre-expander exhaust treatment device, into the exhaust guide 9, by means of the post combustion fuel injector 307. The second fuel injection is controlled so as for fuel from the second fuel injection to provide, with air in the exhaust gases produced by the combustion, a substantially stoichiometric mixture of air and fuel.

The second injection is further controlled so as to be made with a timing that is associated with the timing of the actuation of the exhaust valves 304 of the combustors. More specifically, an opening sequence of one of the exhaust valves 304 is provided to allow exhaust gases from the first expansion out of the respective combustor 3, and the second fuel injection is made during or shortly after such an opening sequence. Thus, the frequency of second fuel injections is the same as the frequency of combustions in all combustors. I.e., the frequency of second fuel injections is a multiple of the frequency of combustions in one of the combustors multiplied by the number of combustors 3, in this example three.

In the pre-expander exhaust treatment device 7, 8 an exhaust treatment process comprises a reaction S14 of fuel from the second fuel second fuel injection, with air in the received exhaust gases to produce heat.

The exhaust gases produced by the combustion are allowed S802 to be guided from the pre-expander exhaust treatment device 7, 8 to the expanders 6. In the expanders 6 a second expansion of the received exhaust gases is allowed S10. Thereby, the heat produced by the exhaust treatment process in the pre-expander exhaust treatment device 7, 8 is converted to mechanical energy in the second expansion in the expander 6.

The exhaust gases are then received from the expanders 6 by the post-expander exhaust treatment device 11.

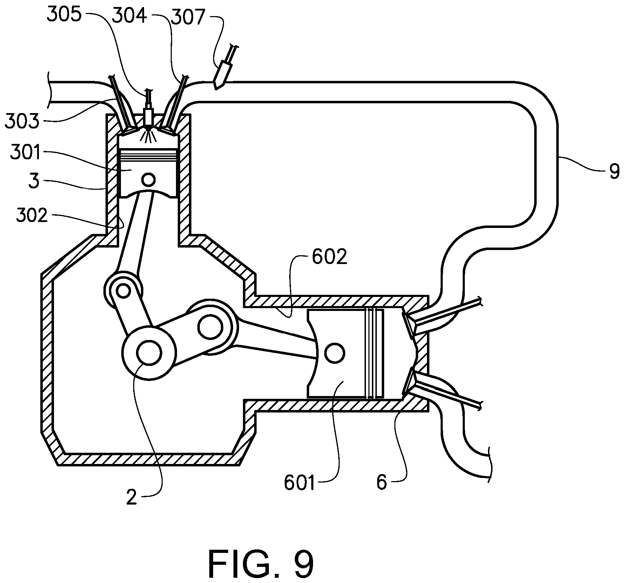

Reference is made to fig. 9 depicting an engine system according to an alternative, simpler embodiment of the invention. The system 1 comprises a combustor 3 arranged to repetitively receive air and fuel, combust the received air and fuel, and expand the combusted air and fuel, an expander 6 comprising a cylinder 602 and a piston 601 arranged to reciprocate in the cylinder, the piston 601 being connected to a crankshaft 2 of the engine system, and an exhaust guide 9 arranged to guide exhaust gases from the combustor 3 to the expander 6. The system is arranged to provide, by means of a main fuel injector 305, an injection of fuel into the combustor. The system is further arranged to provide, by means of a post combustion fuel injector 307, an injection of fuel into the exhaust guide 9.

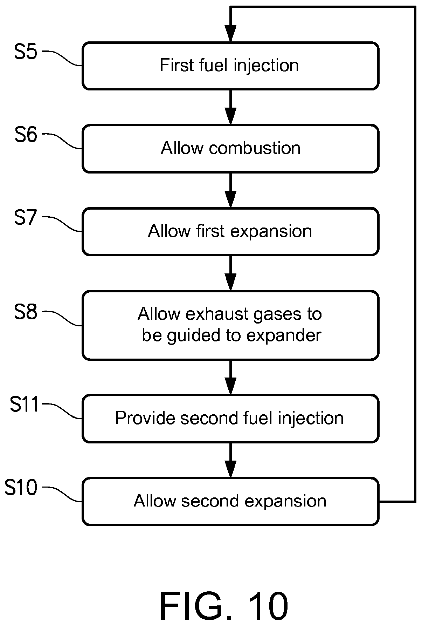

Reference is made to fig. 10 depicting steps in a method for controlling the system in fig. 9. The method comprises providing S5 a first fuel injection by means of a main fuel injector 305, allowing S6 the fuel from the first fuel injection to be combusted in the combustor 3 in air introduced to the combustor, and allowing S7 a first expansion in the combustor 3 of the combusted fuel and air. The method further comprises allowing S8 exhaust gases produced by the combustion to be guided to the expander 6, and providing S11 a second fuel injection after the first expansion and into the exhaust guide 9. The method also comprises allowing S10 a second expansion of the received exhaust gases in the expander 6.

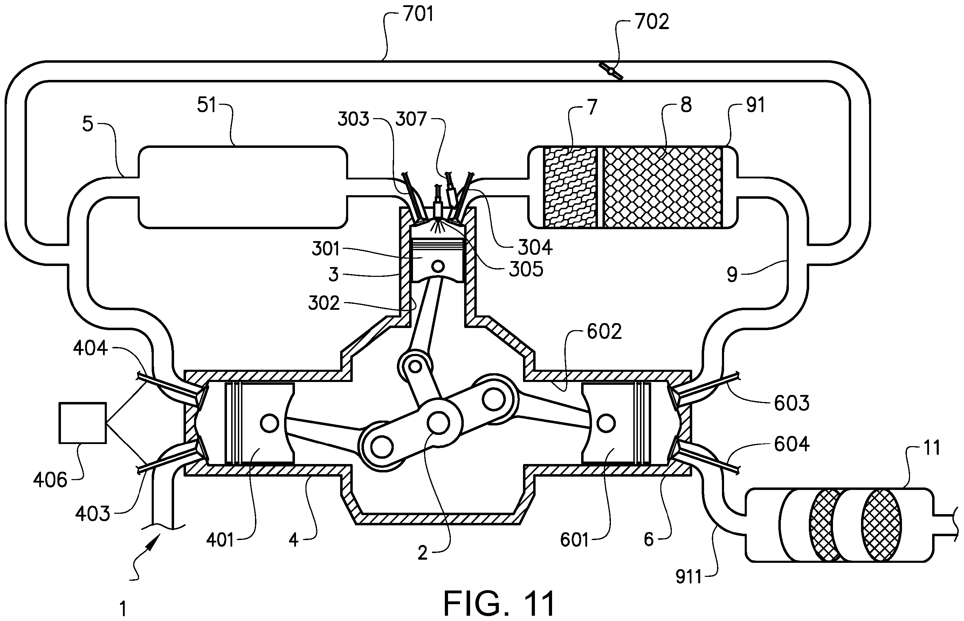

Reference is made to fig. 11 depicting an engine system according to another embodiment. The system shares the features with the system described above with reference to fig. 2 and fig. 3, except for the following one: A post combustion fuel injector 307 is provided for each of the combustors 3. Thus in this example there are three post combustion fuel injectors 307. Each post combustion fuel injector 307 is arranged to inject fuel onto the exhaust valve 304 of the respective combustor 3. As stated, this may provide a beneficial cooling of the exhaust valve, and a good mixing of the added fuel with exhaust gases.

The system in fig. 11 comprises an exhaust gas recirculation arrangement comprising an exhaust gas recirculation (EGR) guide 701 extending from the exhaust guide 9 to the air guide 5. A valve 702 is provided to control the flow through the EGR guide 701. Thereby exhaust gases may be recirculated to the air guide 5. For control of the compressor inlet valves 403 so as to control the amount of air introduced to the combustors 3, the control unit 14 (fig. 3) is arranged to control the compressor valve actuator assembly 406 so as for the inlet valves 403 to be selectively left open during the beginning of the compression strokes so as to expel part of the admitted air similarly to a Miller cycle. Alternatively, similarly to another form of the Miller cycle, the inlet valves 403 may be selectively closed during the intake strokes so as to reduce the amount of admitted air.

The controllable exhaust gas recirculation and the adjustable compressor inlet valve 403 makes it possible retain at somewhat lower loads the second mode of operation described above by reducing the amount of air supplied to the combustors 3, by EGR and compressor inlet valve Miller cycle style actuation, so as for the relatively low lambda value to be retained. Thereby the stoichiometric mixture may still be allowed by the second fuel injection.

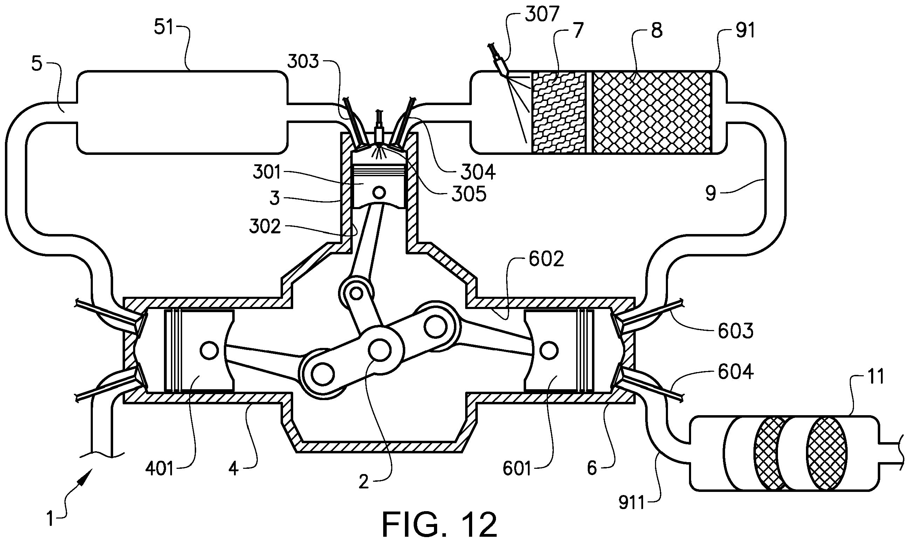

Reference is made to fig. 12 depicting an engine system according to yet another embodiment. The system shares the features with the system described above with reference to fig. 2 and fig. 3, except for the following one: The post combustion fuel injector 307 is arranged to inject the fuel directly onto the pre-expander exhaust treatment device 7, 8, more specifically directly onto the three way catalytic converter 7.

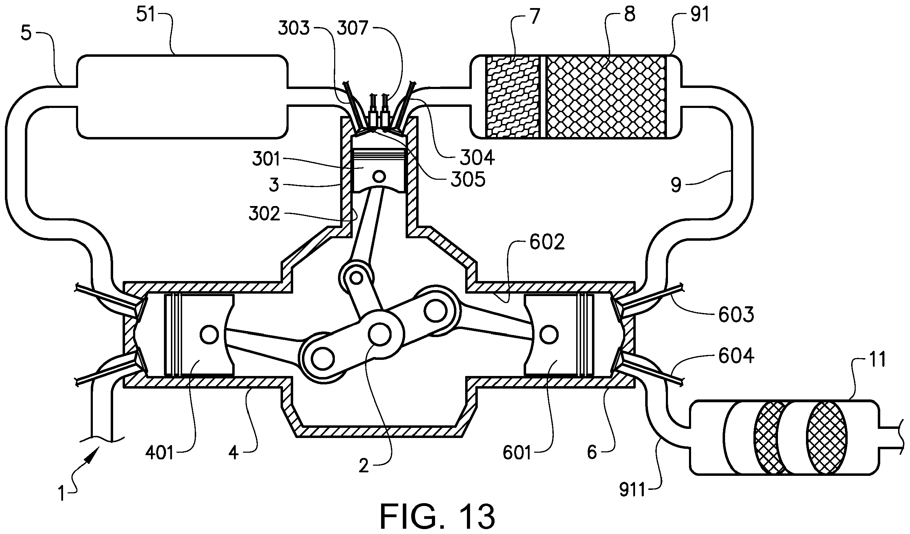

Reference is made to fig. 13 depicting an engine system according to a further embodiment. The system shares the features with the system described above with reference to fig. 2 and fig. 3, except for the following one: A post combustion fuel injector 307 is provided for each of the combustors 3. At each combustor 3, the respective post combustion fuel injector 307 is arranged to provide the injection of fuel into the combustor, i.e. into the cylinder 302 of the combustor. The control unit 14 (fig. 3) is arranged to control the respective post combustion fuel injector 307 so as to inject fuel after a combustion in the combustor 3 and before a reception of air and fuel in the combustor for a subsequent combustion. Said combustions are provided by fuel injections by the main fuel injector 305. Preferably, the post combustion fuel injector 307 is arranged to inject the fuel during the expansion stroke of the respective combustor, or during the exhaust stroke thereof. Thereby, the fuel injected by the post combustion fuel injector 307 may be transported with the exhaust gases to the exhaust guide 9 and to the pre-expander exhaust treatment device 7, 8.

It is understood that each injection of the post combustion fuel injector 307 is provided with a timing that matches an opening sequence of the exhaust valve 304 of the respective combustor 3, in the first mode as well as the second mode of operation as described above with reference to fig. 4 - fig. 8. As suggested above the post combustion fuel injector fuel injections are in the first mode adapted to the NOx storage build-up rate of the three way catalytic converter 7. Thus, in the embodiment in fig. 13, the injections of each post combustion fuel injector 307 may be provided at a frequency that is smaller than the frequency of opening sequences of the respective exhaust valve 304, but nevertheless, each post combustion fuel injector fuel injection is provided with a timing that matches an opening sequence of the respective exhaust valve 304.

To avoid cylinder wall deposits, the post combustion fuel injectors 307 in the embodiment in fig. 13 are preferably arranged to direct the fuel injected towards the respective piston 301, even if the piston is at a distance from the top dead centre position.

It should be noted that in some embodiments, the system may comprise a main fuel injector 305 arranged to inject into the respective combustor 3 fuel to be combusted with received air, the main fuel injector further being arranged to provide an injection of fuel into the combustor after a combustion in the combustor 3 and before a reception of air and fuel in the combustor for a subsequent combustion. Thereby, a single fuel injector at each combustor may provide both functions provided by the main fuel injector and the post combustion fuel injector in the embodiment in fig. 13.

It is to be understood that the present invention is not limited to the embodiments described above and illustrated in the drawings; rather, the skilled person will recognize that many changes and modifications may be made within the scope of the appended claims.

## Claims

1. A method of controlling an internal combustion engine system (1) comprising a combustor (3), an expander (6), and an exhaust guide (9) arranged to guide exhaust gases from the combustor (3) to the expander (6), the method comprising
- introducing air into the combustor (3),
- providing (S5) a first fuel injection,
- allowing (S6) at least a portion of the fuel from the first fuel injection to be combusted in the combustor (3) in the air introduced to the combustor,
- allowing (S7) a first expansion in the combustor (3) of the combusted fuel and air,
- allowing (S8) exhaust gases produced by the combustion to be guided to the expander (6),
- allowing (S10) a second expansion of the received exhaust gases in the expander (6),
- providing (S11) a second fuel injection after the first expansion into the exhaust guide (9), and/or providing (S11) a second fuel injection into the combustor (3) after the combustion and before an introduction of air into the combustor (3) for a subsequent combustion in the combustor,
- allowing (S8) the exhaust gases produced by the combustion to be guided to a pre-expander exhaust treatment device (7, 8) in the exhaust guide (9), and allowing (S9, S12) the pre-expander exhaust treatment device (7, 8) to provide an exhaust treatment process to the received exhaust gases, the second fuel injection being provided upstream of the pre-expander exhaust treatment device (7, 8),
- **characterized in that** the expander (6) comprises a cylinder (602) and a piston (601) arranged to reciprocate in the cylinder, the piston (601) being connected to a crankshaft (2) of the engine system,
- wherein allowing (S9, S12) the pre-expander exhaust treatment device (7, 8) to provide an exhaust treatment process comprises allowing (S9) nitrogen oxides (NOx) in the received exhaust gases to be stored in the pre-expander exhaust treatment device (7, 8),
- wherein the exhaust treatment process comprises a reaction (S12) of fuel from the second fuel injection with air in the received exhaust gases and at least a portion of the stored nitrogen oxides (NOx) to produce nitrogen (N2),
- the method comprising repeating a plurality of times the steps of providing (S11) a second fuel injection and allowing (S9) stored nitrogen oxides (NOx) to build up in the pre-expander exhaust treatment device (7, 8) between each of the second fuel injections.

2. A method according to claim 1, **characterized in that** the exhaust treatment process comprises a reaction (S12) of fuel from the second fuel injection with air in the received exhaust gases and at least a portion of the stored nitrogen oxides (NOx) to produce ammonia (NH3).

3. A method according to claim 2, **characterized by** allowing (S13) the produced ammonia (NH3) to react with nitrogen oxides (NOx) in the exhaust gases from the pre-expander exhaust treatment device (7, 8) to produce nitrogen (N2).

4. A method according to claim 3, **characterized in that** the reaction between the ammonia (NH3) and the nitrogen oxides (NOx) is provided (S13) in a post-expander exhaust treatment device (11) arranged to receive exhaust gases from the expander (6).

5. A method according to any one of claims 1-4, **characterized by** controlling (S5) the first fuel injection so as for the combustion in the combustor to be a lean combustion.

6. A method according to claim 5, **characterized by** controlling the second fuel injection so as for fuel from the second fuel injection to provide, with air in the exhaust gases produced by the combustion, a substantially stoichiometric mixture of air and fuel.

7. A method according to any one of claims 1-6, **characterized by** allowing heat produced (S14) by the exhaust treatment process in the pre-expander exhaust treatment device (7, 8) to be at least partially converted to mechanical energy in the second expansion in the expander (6).

8. A method according to any one of claims 1-7, where the system comprises an exhaust gas recirculation arrangement, **characterized in that** the method comprises recirculating exhaust gases to an air guide arranged to provide air to the combustor.

9. A method according to any one of claims 1-8, where the system comprises a piston compressor (4) arranged to be driven by the crankshaft (2) and provided with a compressor inlet valve (403), and an air guide (5) arranged to guide air from the compressor (4) to the combustor (3) for the air introduction to the combustor, **characterized in that** the method comprises controlling the compressor inlet valve (403) so as to control the amount of air introduced to the combustor (3).

10. A method according to any one of claims 1-9, **characterized in that** the steps of any one of the claims 1-4 are carried out in a first mode (S3) of operation of the engine system, and the steps of any one of claims 5-9 are carried out in a second mode (S4) of operation of the engine system, the method further comprising receiving a request for a torque produced by the engine system, and selecting (S2), in dependence on the torque request, to operate the engine system in the first mode or in the second mode, wherein the first mode is executed at relatively low loads of the system and the second mode is executed at relatively high loads of the system.

## Patentansprüche

1. Verfahren zum Steuern eines Verbrennungsmotorsystems (1), umfassend eine Brennkammer (3), einen Expander (6) und eine Abgasführung (9), die angeordnet sind, um Abgase von der Brennkammer (3) zum Expander (6) zu führen, das Verfahren umfassend
- Einleiten von Luft in die Brennkammer (3),
- Bereitstellen (S5) einer ersten Kraftstoffeinspritzung,
- Ermöglichen (S6), dass zumindest ein Teil des Kraftstoffs aus der ersten Kraftstoffeinspritzung in der Brennkammer (3) in der in die Brennkammer eingebrachten Luft verbrannt werden kann, wobei eine erste Expansion in der Brennkammer (3) des verbrannten Kraftstoffs und der verbrannten Luft ermöglicht (S7) wird,
- Ermöglichen (S8), dass Abgase, die bei der Verbrennung entstehen, zum Expander (6) geleitet werden,
- Ermöglichen (S10) einer zweiten Expansion der empfangenen Abgase im Expander (6),
- Bereitstellen (S11) einer zweiten Kraftstoffeinspritzung nach der ersten Expansion in die Abgasführung (9) und/oder Bereitstellen (S11) einer zweiten Kraftstoffeinspritzung in die Brennkammer (3) nach der Verbrennung und vor einem Einleiten von Luft in die Brennkammer (3) für eine nachfolgende Verbrennung in der Brennkammer,
- Ermöglichen (S8), dass die durch die Verbrennung erzeugten Abgase zu einer Vorexpander-Abgasbehandlungsvorrichtung (7, 8) in der Abgasführung (9) geleitet werden, und Ermöglichen (S9, S12) der Vorexpander-Abgasbehandlungsvorrichtung (7, 8), ein Abgasbehandlungsverfahren für die empfangenen Abgase bereitzustellen, wobei die zweite Kraftstoffeinspritzung vor der Vorexpander-Abgasbehandlungsvorrichtung (7, 8) bereitgestellt wird,
- **dadurch gekennzeichnet, dass** der Expander (6) einen Zylinder (602) und einen Kolben (601) umfasst, der so angeordnet ist, dass er sich in dem Zylinder hin- und herbewegt, wobei der Kolben (601) mit einer Kurbelwelle (2) des Motorsystems verbunden ist,
- wobei Ermöglichen (S9, S12), dass die Vorexpander-Abgasbehandlungsvorrichtung (7, 8) ein Abgasbehandlungsverfahren bereitstellt, Ermöglichen (S9) umfasst, dass Stickoxide (NOx) in den empfangenen Abgasen in der Vorexpander-Abgasbehandlungsvorrichtung (7, 8) gespeichert werden können,
- wobei das Abgasbehandlungsverfahren eine Reaktion (S12) von Kraftstoff aus der zweiten Kraftstoffeinspritzung mit Luft in den empfangenen Abgasen und mindestens einem Teil der gespeicherten Stickoxide (NOx) zur Erzeugung von Stickstoff (N2) umfasst, wobei das Verfahren das mehrmalige Wiederholen der Schritte des Bereitstellens (S11) einer zweiten Kraftstoffeinspritzung und Ermöglichen (S9) umfasst, dass sich gespeicherte Stickoxide (NOx) in der Vorexpander-Abgasbehandlungsvorrichtung (7, 8) zwischen jeder der zweiten Kraftstoffeinspritzungen aufbauen.

2. Verfahren nach Anspruch 1, **dadurch gekennzeichnet, dass** das Abgasbehandlungsverfahren eine Reaktion (S12) von Kraftstoff aus der zweiten Kraftstoffeinspritzung mit Luft in den empfangenen Abgasen und mindestens einem Teil der gespeicherten Stickoxide (NOx) zur Erzeugung von Ammoniak (NH3) umfasst.

3. Verfahren nach Anspruch 2, **gekennzeichnet durch** Ermöglichen (S13), dass das erzeugte Ammoniak (NH3) mit den Stickoxiden (NOx) in den Abgasen aus der Vorexpander-Abgasbehandlungsvorrichtung (7, 8) reagieren kann, um Stickstoff (N2) zu erzeugen.

4. Verfahren nach Anspruch 3, **dadurch gekennzeichnet, dass** die Reaktion zwischen dem Ammoniak (NH3) und den Stickoxiden (NOx) in einer Nachexpander-Abgasbehandlungsvorrichtung (11) vorgesehen ist (S13), die so angeordnet ist, dass sie Abgase aus dem Expander (6) empfängt.

5. Verfahren nach einem der Ansprüche 1-4, **gekennzeichnet durch** Steuern (S5) der ersten Kraftstoffeinspritzung, so dass die Verbrennung in der Brennkammer eine magere Verbrennung ist.

6. Verfahren nach Anspruch 5, **gekennzeichnet durch** Steuern der zweiten Kraftstoffeinspritzung, so dass Kraftstoff aus der zweiten Kraftstoffeinspritzung mit Luft in den durch die Verbrennung erzeugten Abgasen ein im Wesentlichen stöchiometrisches Gemisch aus Luft und Kraftstoff liefert.

7. Verfahren nach einem der Ansprüche 1-6, **gekennzeichnet durch** Ermöglichen, dass die durch das Abgasbehandlungsverfahren in der Vorexpander-Abgasbehandlungsvorrichtung (7, 8) vor dem Expander erzeugte Wärme (S14) bei der zweiten Expansion im Expander (6) zumindest teilweise in mechanische Energie umgewandelt werden kann.

8. Verfahren nach einem der Ansprüche 1-7, wobei das System eine Abgasrückführungsanordnung umfasst, **dadurch gekennzeichnet, dass** das Verfahren das Rückführen von Abgasen zu einer Luftführung umfasst, die angeordnet ist, um der Brennkammer Luft bereitzustellen.

9. Verfahren nach einem der Ansprüche 1-8, wobei das System einen Kolbenkompressor (4) umfasst, der so angeordnet ist, dass er von der Kurbelwelle (2) angetrieben wird und mit einem Kompressoreinlassventil (403) und einer Luftführung (5) versehen ist, die angeordnet ist, um Luft vom Kompressor (4) zur Brennkammer (3) für die Lufteinführung zur Brennkammer zu führen, **dadurch gekennzeichnet, dass** das Verfahren Steuern des Kompressoreinlassventils (403) umfasst, um die in die Brennkammer (3) eingeführte Luftmenge zu steuern.

10. Verfahren nach einem der Ansprüche 1-9, **dadurch gekennzeichnet, dass** die Schritte nach einem der Ansprüche 1-4 in einem ersten Betriebsmodus (S3) des Motorsystems ausgeführt werden, und die Schritte nach einem der Ansprüche 5-9 in einem zweiten Betriebsmodus (S4) des Motorsystems ausgeführt werden, wobei das Verfahren ferner das Empfangen einer Anforderung für ein vom Motorsystem erzeugtes Drehmoment und das Auswählen (S2) in Abhängigkeit von der Drehmomentanforderung zum Betreiben des Motorsystems im ersten Modus oder im zweiten Modus umfasst, wobei der erste Modus bei relativ niedrigen Lasten des Systems ausgeführt wird und der zweite Modus bei relativ hohen Lasten des Systems ausgeführt wird.

## Revendications

1. Procédé de commande de système de moteur à combustion interne (1) comprenant un brûleur (3), un expanseur (6), et un guide d'échappement (9) conçu pour guider les gaz d'échappement du brûleur (3) vers l'expanseur (6), ce procédé comprenant :
- l'introduction d'air dans le brûleur (3),
- la prévision (S5) d'une première injection de carburant,
- le fait de laisser brûler (S6) au moins une partie du carburant provenant de la première injection de carburant dans le brûleur (3) dans l'air introduit dans le brûleur,
- le fait de permettre (S7) une première expansion dans le brûleur (3) du fluide brûlé et de l'air,
- le fait de permettre (S8) aux gaz d'échappement produits par la combustion d'être guidés vers l'expanseur (6),
- le fait de permettre (S10) une seconde expansion des gaz d'échappement reçus dans l'expanseur (6),
- la prévision (S11) d'une seconde injection de carburant après la première expansion dans le guide d'échappement (9), et/ou la prévision (S11) d'une seconde injection de carburant dans le brûleur (3) après la combustion et avant une introduction d'air dans le brûleur (3) pour une combustion subséquente dans le brûleur,
- le fait de permettre (S8) aux gaz d'échappement produits par la combustion d'être guidés vers un dispositif de traitement d'échappement pré-expanseur (7, 8) dans le guide d'échappement (9), et le fait de permettre (S9, S12) au dispositif de traitement d'échappement pré-expanseur (7, 8) d'assurer un processus de traitement d'échappement pour les gaz d'échappement reçus, la seconde injection de carburant étant prévue en amont du dispositif de traitement d'échappement pré-expanseur (7, 8),
- **caractérisé en ce que** l'expanseur (6) comprend un cylindre (602) et un piston (601) conçu pour aller et venir dans le cylindre, le piston (601) étant connecté à un vilebrequin (2) du système de moteur,
- le fait de permettre (S9, S12) au dispositif de traitement d'échappement pré-expanseur (7, 8) d'assurer un processus de traitement d'échappement comprenant le fait de permettre (S9) à des oxydes d'azote (NOx) contenus dans les gaz d'échappement reçus d'être stockés dans le dispositif de traitement d'échappement pré-expanseur (7, 8),
- le processus de traitement d'échappement comprenant une réaction (S12) de carburant provenant de la seconde injection de carburant avec de l'air dans les gaz d'échappement reçus et au moins une partie des oxydes d'azote stockés (NOx) de produire de l'azote (N2),
- le procédé comprenant la répétition une pluralité de fois des étapes de réalisation (S11) d'une seconde injection de carburant et le fait de permettre (S9) aux oxydes d'azote stockés (NOx) de se former dans le dispositif de traitement d'échappement pré-expanseur (7, 8) entre chacune des secondes injections de carburant.

2. Procédé selon la revendication 1, **caractérisé en ce que** le processus de traitement d'échappement comprend une réaction (S12) de carburant provenant de la seconde injection de carburant avec de l'air dans les gaz d'échappement reçus et au moins une partie des oxydes d'azote stockés (NOx) pour produire de l'ammoniaque (NH3).

3. Procédé selon la revendication 2, **caractérisé par** le fait de permettre (S13) à l'ammoniaque défilement le produit (NH3) de réagir avec des oxydes d'azote (NOx) dans les gaz d'échappement provenant du dispositif de traitement d'échappement pré-expanseur (7, 8) pour produire de l'azote (N2).

4. Procédé selon la revendication 3, **caractérisé en ce que** la réaction entre l'ammoniaque (NH3) et des oxydes d'azote (NOx) est assurée (S13) dans un dispositif de traitement d'échappement post-expanseur (11) conçu pour recevoir des gaz d'échappement en provenance de l'expanseur (6).

5. Procédé selon l'une quelconque des revendications 1 à 4, **caractérisé par** la commande (S5) de la première injection de carburant de manière à ce que la combustion dans le brûleur soit une combustion faible.

6. Procédé selon la revendication 5, **caractérisé par** la commande de la seconde injection de carburant de manière à ce que le carburant provenant de la seconde injection de carburant crée, avec l'air des gaz d'échappement produits par la combustion, un mélange substantiellement stoechiométrique d'air et de carburant.

7. Procédé selon l'une quelconque des revendications 1 à 6, **caractérisé par** le fait de permettre à la chaleur produite (S14) dans le processus de traitement d'échappement dans le dispositif de traitement d'échappement pré-expanseur (7, 8) d'être au moins partiellement convertie en énergie mécanique dans la seconde expansion dans l'expanseur (6).

8. Procédé selon l'une quelconque des revendications 1 à 7, dans lequel le système comprend un dispositif de recirculation de gaz d'échappement, **caractérisé en ce que** le procédé comprend la recirculation de gaz d'échappement vers un guide d'air conçu pour fournir de l'air au brûleur.

9. Procédé selon l'une quelconque des revendications 1 à 8, dans lequel le système comprend un compresseur à piston (4) conçu pour être entraîné par le vilebrequin (2) et pourvu d'une soupape d'admission de compresseur (403), et un guide d'air (5) conçu pour guider de l'air depuis le compresseur (4) jusqu'au brûleur (3) pour l'introduction d'air dans le brûleur, **caractérisé en ce que** le procédé comprend la commande de la soupape d'admission de compresseur (403) de manière à commander la quantité d'air introduite dans le brûleur (3).

10. Procédé selon l'une quelconque des revendications 1 à 9, **caractérisé en ce que** les étapes de l'une quelconque des revendications 1 à 4 sont réalisées dans un premier mode (S3) de fonctionnement du système de moteur, et que les étapes de l'une quelconque des revendications 5 à 9 sont réalisées dans un second mode (S4) de fonctionnement du système de moteur, le procédé comprenant en outre la réception d'une demande de couple produit par le système de moteur, et de sélection (S2), en fonction de la demande de couple, du fonctionnement du système de moteur dans le premier mode ou dans le second mode, le premier mode étant exécuté à des charges relativement faibles du système et le second mode étant exécuté à des charges relativement élevées du système.
